# EUROPÄISCHE PATENTSCHRIFT

(11) **EP 3 419 876 B1**
(45) Veröffentlichungstag und Bekanntmachung des Hinweises auf die Patenterteilung: **08.01.2020**
(21) Anmeldenummer: 17700843.0
(22) Anmeldetag: 20.01.2017
(51) Int. Cl.: B60T 8/40

(54) **ZUSATZMODUL FÜR EINE ELEKTROHYDRAULISCHE BREMSANLAGE UND BREMSANLAGENSYSTEM MIT EINEM DERARTIGEN ZUSATZMODUL**
ADD-ON MODULE FOR AN ELECTROHYDRAULIC BRAKE ASSEMBLY, AND BRAKE ASSEMBLY SYSTEM COMPRISING AN ADD-ON MODULE OF SAID TYPE
MODULE ADDITIONNEL POUR SYSTÈME DE FREINAGE ÉLECTROHYDRAULIQUE ET ENSEMBLE SYSTÈME DE FREINAGE COMPRENANT UN MODULE ADDITIONNEL DE CE TYPE

(30) Priorität: 26.02.2016 DE 102016203119
(43) Veröffentlichungstag der Anmeldung: 02.01.2019
(73) Patentinhaber: Continental Teves AG & Co. OHG, 60488 Frankfurt am Main (DE)
(72) Erfinder: DINKEL, Dieter, 65824 Schwalbach (DE)
(86) Internationale Anmeldenummer: PCT/EP2017/051171
(87) Internationale Veröffentlichungsnummer: WO 2017/144201

(56) Entgegenhaltungen:
- WO-A1-2012/150120
- WO-A1-2014/048600
- WO-A1-2015/106892
- WO-A1-2015/139983
- DE-A1- 10 023 301
- US-A1- 2015 151 726

## Beschreibung

Die Erfindung betrifft ein Zusatzmodul für eine elektrohydraulische Bremsanlage, insbesondere zur Verwendung bei hochautomatisiertem Fahren, umfassend eine Hydraulikeinheit mit einer Druckbereitstellungsvorrichtung zum Druckaufbau in wenigstens zwei Bremsen. Sie betrifft weiterhin ein Bremsanlagensystem.

In der Kraftfahrzeugtechnik finden "Brake-by-Wire"-Bremsanlagen eine immer größere Verbreitung. Derartige Bremsanlagen umfassen oftmals neben einem durch den Fahrzeugführer betätigbaren Hauptbremszylinder eine elektrisch ("by-Wire") ansteuerbare Druckbereitstellungseinrichtung, mittels welcher in der Betriebsart "Brake-by-Wire" eine Betätigung der Radbremsen stattfindet.

Bei diesen modernen Bremssystemen, insbesondere elektrohydraulischen Bremssystemen mit der Betriebsart "Brake-by-Wire", ist der Fahrer von dem direkten Zugriff auf die Bremsen entkoppelt. Bei Betätigung des Pedals werden gewöhnlich eine Pedalentkopplungseinheit und ein Simulator betätigt, wobei durch eine Sensorik der Bremswunsch des Fahrers erfasst wird. Der gewöhnlich als Hauptbremszylinder ausgebildete Pedalsimulator dient dazu, dem Fahrer ein möglichst vertrautes und komfortables Bremspedalgefühl zu vermitteln. Der erfasste Bremswunsch führt zu der Bestimmung eines Sollbremsmomentes, woraus dann der Sollbremsdruck für die Bremsen ermittelt wird. Der Bremsdruck wird dann aktiv von einer Druckbereitstellungseinrichtung in den Bremsen aufgebaut.

Das tatsächliche Bremsen erfolgt also durch aktiven Druckaufbau in den Bremskreisen mit Hilfe einer Druckbereitstellungseinrichtung, die von einer Steuer- und Regeleinheit angesteuert wird. Durch die hydraulische Entkopplung der Bremspedalbetätigung von dem Druckaufbau lassen sich in derartigen Bremssystemen viele Funktionalitäten wie ABS, ESC, TCS, Hanganfahrhilfe etc. für den Fahrer komfortabel verwirklichen.

In derartigen Bremssystemen ist gewöhnlich eine hydraulische Rückfallebene vorgesehen, durch die der Fahrer durch Muskelkraft bei Betätigung des Bremspedals das Fahrzeug abbremsen bzw. zum Stehen bringen kann, wenn die "By-Wire"-Betriebsart ausfällt oder gestört ist. Während im Normalbetrieb durch eine Pedalentkopplungseinheit die oben beschriebene hydraulische Entkopplung zwischen Bremspedalbetätigung und Bremsdruckaufbau erfolgt, wird in der Rückfallebene diese Entkopplung aufgehoben, so dass der Fahrer direkt Bremsmittel in die Bremskreise verschieben kann. In die Rückfallebene wird geschaltet, wenn mit Hilfe der Druckbereitstellungseinrichtung kein Druckaufbau mehr möglich ist. Dies ist u.a. dann der Fall, wenn das Rückschlagventil, welches die Druckbereitstellungseinrichtung mit dem Reservoir verbindet, nicht mehr zuverlässig sperrt, so dass ein Druckaufbau nicht mehr zuverlässig möglich ist.

Die Druckbereitstellungseinrichtung in oben beschriebenen Bremssystemen wird auch als Aktuator bzw. hydraulischer Aktuator bezeichnet. Insbesondere werden Aktuatoren als Linearaktuatoren bzw. Lineareinheiten ausgebildet, bei denen zum Druckaufbau ein Kolben axial in einen hydraulischen Druckraum verschoben wird, der in Reihe mit einem Rotations-Translationsgetriebe gebaut ist. Die Motorwelle eines Elektromotors wird durch das Rotations-Translationsgetriebe in eine axiale Verschiebung des Kolbens umgewandelt.

Aus der DE 10 2013 204 778 A1 ist eine "Brake-by-Wire"-Bremsanlage für Kraftfahrzeuge bekannt, welche einen bremspedalbetätigbaren Tandemhauptbremszylinder, dessen Druckräume jeweils über ein elektrisch betätigbares Trennventil trennbar mit einem Bremskreis mit zwei Radbremsen verbunden sind, eine mit dem Hauptbremszylinder hydraulisch verbundene, zu- und abschaltbare Simulationseinrichtung, und eine elektrisch steuerbare Druckbereitstellungseinrichtung, welche durch eine Zylinder-Kolben-Anordnung mit einem hydraulischen Druckraum gebildet wird, deren Kolben durch einen elektromechanischen Aktuator verschiebbar ist, umfasst, wobei die Druckbereitstellungseinrichtung über zwei elektrisch betätigbare Zuschaltventile mit den Einlassventilen der Radbremsen verbunden ist.

Im Normalbetrieb wird der Fahrer durch Schalten von Fahrertrennventilen von den Radbremsen getrennt und der Linearaktuator wird durch Schalten von Aktuatorzuschaltventilen hydraulisch mit den Radbremsen verbunden. Ein Verfahren des Linearaktuators aus seiner Ruhelage nach vorn bewirkt einen Druckaufbau und im umgekehrten Falle einen Druckabbau in den Radbremsen.

Eine derartige Brake-by-Wire-Bremsanlage eignet sich zur Verwendung beim automatisierten Fahren, bei dem die Fahrzeugsteuerung teilweise oder im Wesentlichen vollständig automatisiert wird, so dass der Fahrer sich mit anderen Aktivitäten befassen kann. Bei einem Ausfall der Normalebene der Bremsanlage kann es relativ lange dauern, bis dem Fahrer dieser Ausfall auffällt und er selbst das Bremspedal durch Muskelkraft betätigt.

Zum automatisierten Fahren wird daher ein Backupmodul benötigt, welches bei Ausfall des Hauptbremssystems eine Grundbremsfunktionalität bis zur Übernahme durch den Fahrer sicherstellen kann. Auf diese Weise wird also genau die Zeitspanne überbrückt, die zwischen dem Ausfall und der Einsatzbereitschaft des Fahrers liegt.

Hierzu gibt es bereits verschiedene Lösungsvorschläge. Bei manchen dieser technischen Lösungen ist vorgesehen, auf dem Zusatzmodul einen eigenen Bremsflüssigkeitsbehälter zu installieren, der über eine Schlauchleitung am Behälter der primären Bremsanlage angeschlossen ist.

Eine derartige Anordnung weist allerdings eine Reihe von Nachteilen auf. Zunächst weist sie eine unsichere Schlauchverbindung zwischen den beiden Bremsflüssigkeitsbehältern auf, die leicht beschädigt werden kann und zu Leckagen führen kann.

Für die Überwachung ist eine weitere Behälterwarneinrichtung erforderlich. Das Packaging eines derartigen Zusatzmoduls erweist sich darüber hinaus als ungünstig und schwierig.

Aus der WO 2015/139983 A1 ist ein elektrohydraulisches Aggregat für eine Bremsanlage mit einem oder mehreren integrierten Druckmittelreservoir bekannt. Das Druckmittelreservoir ist zur Bereithaltung von Druckmittel für eine Pumpe vorgesehen und ist daher mit einer Saugseite der Pumpe hydraulisch verbunden. Das Druckmittelreservoir umfasst ein druckmittel-dichtes Medientrennelement, das den ersten Raum mit dem Druckmittel von einem zweiten belüfteten Raum trennt. Das Druckmittelvolumen des Druckmittelreservoirs ist begrenzt.

In der WO 2015/106892 A1 wird eine Bremsensteuervorrichtung mit einem Druckmittelreservoir beschrieben, welches zur Bereithaltung von Druckmittel für eine Pumpe vorgesehen ist. Das Druckmittelreservoir ist als Kolbenspeicher oder als Balgspeicher ausgeführt. Weitere Details zur Anordnung und Ausführung des Druckmittelreservoirs sind der WO 2015/106892 A1 nicht zu entnehmen. Das Druckmittelreservoir ist in der Fig. 6 lediglich schematisch dargestellt.

Der Erfindung liegt daher die Aufgabe zugrunde, ein Zusatzmodul bereitzustellen, bei welchem die beschriebenen Nachteile vermieden werden sollen. Insbesondere soll es eine erhöhte Sicherheit und Zuverlässigkeit ermöglichen und ein gutes Packaging erlauben. Weiterhin soll ein entsprechendes Bremsanlagensystem bereitgestellt werden.

Diese Aufgabe wird erfindungsgemäß durch ein Zusatzmodul gemäß Anspruch 1 gelöst.

Vorteilhafte Ausgestaltungen der Erfindung sind Gegenstand der Unteransprüche.

Die Erfindung geht von der Überlegung aus, dass dem Zusatzmodul eine äußerst sicherheitsrelevante Funktion zukommt, da es genau in dem kritischen Zeitraum aktiv werden muss, in dem die Bremsanlage nicht funktioniert, der Fahrer aber noch nicht die volle Kontrolle über die Bremsen übernommen hat. Insbesondere bei hochautomatisiertem Fahren, bei dem der Fahrer sich auf das Funktionieren der beteiligten Systeme verlässt und sich anderen Tätigkeiten zuwendet kann es relativ lange dauern, bis der Fahrer einsatzbereit ist und die volle Kontrolle über das Bremspedal erlangt.

Daher muss Sorge getragen werden, dass das Modul, wenn es gebraucht wird, vollständig einsatzbereit und funktionell ist. Das bedeutet insbesondere, dass es zuverlässig einen Bremsvorgang fortsetzen oder einleiten sollte und dementsprechend Bremsdruck aufbauen muss. Daher sollte die Verfügbarkeit von Bremsflüssigkeit sichergestellt werden.

Wie nunmehr erkannt wurde, lassen sich diese strengen Anforderungen erfüllen, indem in der Hydraulikeinheit des Zusatzmoduls die benötigte Bremsflüssigkeit vorgehalten wird bzw. das entsprechende Reservoir in sie integriert wird. Dadurch kann verhindert werden, dass durch eine undichte oder zerstörte hydraulische Leitung zu einem Bremsflüssigkeitsvorratsbehälter der Bremsanlage bei Bedarf nicht genug Druckmittel zur Verfügung steht. Das jeweilige Reservoir ist mit einer hydraulischen Ausgleichsleitung verbunden, die zur Bildung eines Atmosphärenanschlusses vorgesehen ist.

Dass das jeweilige Reservoir in die Hydraulikeinheit integriert ist bedeutet insbesondere, dass das Reservoir in dem gleichen Gehäuse wie die hydraulischen Komponenten wie beispielsweise Ventile und Drucksensoren angeordnet ist und kein externes Bauteil darstellt. Insbesondere sind auch die hydraulischen Leitungen zwischen Reservoir und jeweiliger Pumpe in diesem Gehäuse angeordnet.

Vorteilhafterweise umfasst die Druckbereitstellungsvorrichtung wenigstens eine Pumpe, die mit einem Elektromotor angetrieben wird und deren Saugseite hydraulisch mit dem jeweiligen Reservoir verbunden ist.

In einer bevorzugten Ausführungsform sind zwei Reservoire für Bremsflüssigkeit und genau zwei Pumpen vorgesehen, wobei jede der beiden Pumpen saugseitig mit einer Saugleitung mit genau einem Reservoir hydraulisch verbunden ist. Bevorzugt stellt jeweils ein Reservoir die Bremsflüssigkeit für eine Bremse bereit.

Bevorzugt werden beide Pumpen von einem gemeinsamen Elektromotor angetrieben, der beide Pumpen gleichzeitig antreibt. Durch Öffnen von den Radbremse zugeordneten Einlassventilen kann gezielt jede der Pumpen einzeln zum Fördern von Bremsflüssigkeit veranlasst werden.

Vorteilhafterweise ist jede Pumpe druckseitig mit einer Radbremszuleitung verbunden, die zur Verbindung mit einer hydraulischen Radbremse ausgelegt ist. Die Pumpe kann auf diese Weise Bremsflüssigkeit in die hydraulische Radbremse fördern, wodurch Bremsdruck aufgebaut wird.

Die jeweilige Radbremszuleitung ist vorteilhafterweise mit einem Drucksensor verbunden, der den Druck in der Radbremszuleitung misst so dass auch im Zusatzmodul eine Druckregelung erfolgen kann.

Vorteilhafterweise ist in die jeweilige Saugleitung ein stromlos geschlossenes Ventil zur Regelung der Pumpe geschaltet.

Von der jeweiligen Radbremszuleitung zweigt bevorzugt eine hydraulische Rückführleitung ab, die mit jeweils einem Reservoir hydraulisch verbunden ist. Auf diese Weise kann gezielt Bremsflüssigkeit aus der entsprechenden Radbremse abgeführt werden. Dies ermöglicht das Einstellen verschiedener Bremsdrücke in den mit dem Zusatzmodul hydraulisch verbundenen Radbremsen.

In die jeweilige Rückführleitung ist vorteilhafterweise ein stromlos geschlossenes Rückführventil geschaltet. Das Rückführventil wird bevorzugt während des Druckaufbaus in seine Trennstellung geschaltet und bedarfsweise zum Druckabbau in der jeweiligen Radbremse in seine Durchlassstellung geschaltet.

Vorteilhafterweise ist das Zusatzmodul derart konfiguriert, dass die jeweilige Pumpe aus dem Reservoir von unten ansaugt. Damit wird verhindert, dass keine eventuell noch vorhandene Restluft aus dem Reservoir angesaugt wird. Vorteilhafterweise ist dazu ein Röhrchen in dem Reservoir angeordnet, durch das die Pumpe die Bremsflüssigkeit ansaugt.
Bevorzugt umfasst das Zusatzmodul ein Gehäuse für die Hydraulikeinheit, ein Motorgehäuse und ein Elektronikgehäuse. Das Gehäuse für die Hydraulikeinheit ist insbesondere ein Ventilblock, insbesondere ein Aluminiumventilblock.

Das Gehäuse für die Hydraulikeinheit ist bevorzugt zwischen Elektronikgehäuse und Motorgehäuse angeordnet. Auf diese Weise wird eine besonders kompakte Bauweise erreicht, die einen platzsparenden Einbau in das Fahrzeug ermöglicht. Es ergibt sich auf diese Weise ein komfortabel handhabbares Packaging.

In Bezug auf das Bremsanlagensystem wird die oben genannte Aufgabe erfindungsgemäß gelöst mit einer Bremsanlage, umfassend hydraulisch betätigbare Radbremsen, zumindest ein elektrisch betätigbares Radventil je Radbremse zum Einstellen radindividueller Bremsdrücke; einen unter Atmosphärendruck stehenden Druckmittelvorratsbehälter, einen mit den Radbremsen verbundenen und/oder verbindbaren Hauptbremszylinder und eine elektrisch steuerbare Druckbereitstellungseinrichtung zur Betätigung der Radbremsen mit einem Druckraum, wobei die jeweilige Radbremse hydraulisch durch eine Radbremsleitung mit dem Druckraum verbunden ist, weiterhin umfassend ein oben beschriebenes Zusatzmodul.

Bevorzugt ist die Ausgleichsleitung mit dem Druckmittelvorratsbehälter der Bremsanlage verbunden.

Vorteilhafterweise ist die Druckbereitstellungseinrichtung durch eine Zylinder-Kolben-Anordnung mit einem hydraulischen Druckraum gebildet, deren Druckkolben durch einen Elektromotor und ein dahinter geschaltetes Rotations-Translationsgetriebe verschiebbar ist, wobei der Druckraum mit dem Druckmittelvorratsbehälter über eine hydraulische Nachsaugleitung zum Nachsaugen von Druckmittel verbunden ist.

Das Zusatzmodul ist verbindbar mit einer fremdansteuerbaren Bremsanlage mit einer Druckbereitstellungseinrichtung, die aktiv Druck in den Radbremsen bilden kann. Die Bremsanlage ist beispielsweise in vorteilhafter Ausbildung eine ESC-Bremsanlage.

Vorteilhafterweise ist die Ausgleichsleitung zumindest teilweise als Stahlleitung ausgebildet. Die Ausgleichsleitung wird bevorzugt direkt an den Druckmittelvorratsbehälter angeschlossen, der dazu bevorzugt einen separaten Anschluss verfügt. Auf diese Weise wird ein vorteilhaftes Packaging erreicht. In alternativer Ausgestaltung wird die Ausgleichsleitung zumindest teilweise, insbesondere im Wesentlichen vollständig, durch die Bremsanlage geführt bzw. durch das Gehäuse der Bremsanlage geführt.

In einer bevorzugten Ausführungsform mündet eine erste Radbremsleitung der Bremsanlage in einer ersten Radbremszuleitung des Zusatzmoduls, wobei eine zweite Radbremsleitung der Bremsanlage in einer zweiten Radbremszufuhrleitung des Zusatzmoduls mündet, und wobei in die jeweilige Radbremszuleitung ein stromlos offenes Trennventil geschaltet ist.

Die beiden Radbremszuleitungen sind vorzugsweise mit Vorderradbremsen verbunden.

Die Bremsanlage weist vorteilhafterweise einen Simulator auf, in den Fahrer in einem Brake-by-Wire-Normalbetrieb Bremsflüssigkeit fördert, wobei der Bremswunsch des Fahrers bestimmt wird. Aufgrund des Bremswunsches des Fahrers steuert dann die Steuer- und Regeleinheit der Bremsanlage die Druckbereitstellungseinrichtung an, die einen entsprechenden Druck in den Radbremsen aufbaut.

Die Vorteile der Erfindung liegen insbesondere darin, dass durch die Bereitstellung der Bremsflüssigkeit im Zusatzmodul die Verfügbarkeit und Sicherheit einer mit einem Zusatzmodul ausgestatteten Bremsanlage deutlich erhöht werden. Das Packaging und die Installation sind komfortabel möglich. Ein derartiger Aufbau ermöglicht die Fertigung auf Fertigungslinien von herkömmlichen Bremsanlagen,

Ein Ausführungsbeispiel der Erfindung wird anhand einer Zeichnung näher erläutert. Darin zeigen in stark schematisierter Darstellung:
- FIG. 1: ein hydraulisches Schaltbild eines Bremsanlagensystems mit einer Bremsanlage und einem Zusatzmodul in einer bevorzugten Ausführungsform;
- FIG. 2: das Zusatzmodul gemäß FIG. 1 mit einem Elektronikgehäuse, einem Hydraulikgehäuse für die Hydraulikeinheit und einem Motorgehäuse im zusammengesetzten Zustand in einer bevorzugten Ausführung in einer perspektivischen Darstellung;
- FIG. 3: das Zusatzmodul gemäß FIG. 2 in einer weiteren perspektivischen Darstellung mit abgenommenem Elektronikgehäuse;
- FIG. 4: einen seitlichen Schnitt durch das Zusatzmodul gemäß FIG. 2;
- FIG. 5: eine perspektivische Darstellung des Zusatzmoduls gemäß FIG. 2 mit ausgeblendetem Gehäuse;
- FIG. 6: eine weitere perspektivische Darstellung des Zusatzmoduls mit ausgeblendetem Gehäuse;
- FIG. 7: das Zusatzmodul gemäß FIG. 1 mit einem Elektronikgehäuse, einem Hydraulikgehäuse für die Hydraulikeinheit und einem Motorgehäuse im zusammengesetzten Zustand in einer weiteren bevorzugten Ausführung in einer perspektivischen Darstellung;
- FIG. 8: das Hydraulikgehäuse des Zusatzmoduls gemäß FIG. 7 in einer perspektivischen Darstellung;
- FIG. 9: eine perspektivische Darstellung des Zusatzmoduls gemäß FIG. 7 mit ausgeblendetem Gehäuse; und
- FIG. 10: eine weitere perspektivische Darstellung des Zusatzmoduls mit ausgeblendetem Gehäuse.

Gleiche Teile sind in allen Figuren mit denselben Bezugszeichen versehen.

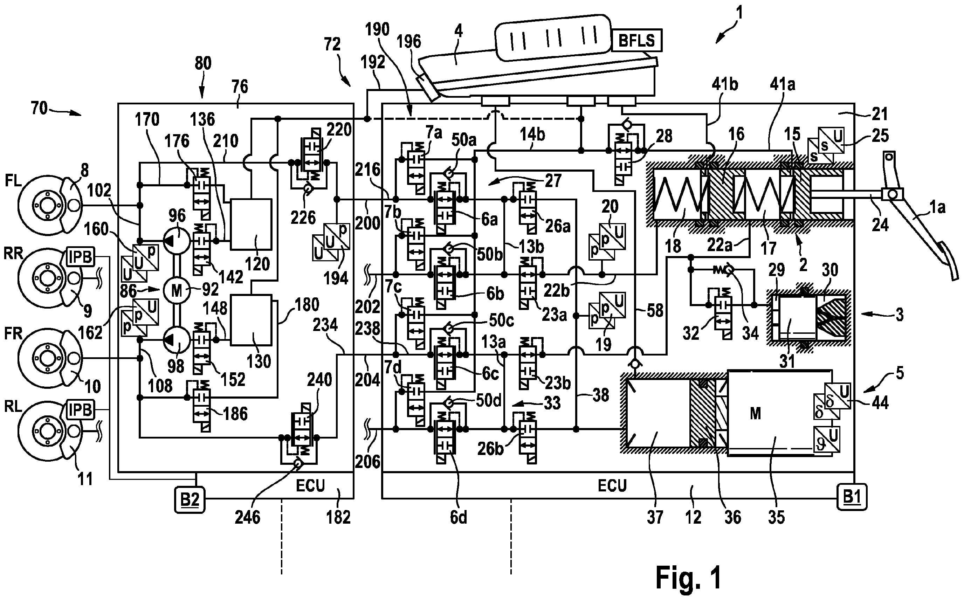

In FIG. 1 ist ein bevorzugtes Ausführungsbeispiel einer erfindungsgemäßen Bremsanlage 1 dargestellt. Die Bremsanlage umfasst einen mittels eines Betätigungs- bzw. Bremspedals 1a betätigbaren Hauptbremszylinder 2, eine mit dem Hauptbremszylinder 2 zusammen wirkende Simulationseinrichtung 3, einen dem Hauptbremszylinder 2 zugeordneten, unter Atmosphärendruck stehenden Druckmittelvorratsbehälter 4, eine elektrisch steuerbare Druckbereitstellungseinrichtung 5, welche durch eine Zylinder-Kolben-Anordnung mit einem hydraulischen Druckraum 37 gebildet wird, deren Kolben 36 durch einen elektromechanischen Aktuator, umfassend einen Elektromotor und ein Rotations-Translationsgetriebe, verschiebbar ist, eine elektrisch steuerbare Druckmodulationseinrichtung zum Einstellen radindividueller Bremsdrücke und eine elektronische Steuer- und Regeleinheit 12.

Die nicht näher bezeichnete Druckmodulationseinrichtung umfasst beispielsgemäß je hydraulisch betätigbare Radbremsen 8, 9, 10, 11 und je betätigbarer Radbremse 8, 9, 10, 11 eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8, 9, 10, 11 angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Systemdruck abgeleitet werden, der in einer an den Druckraum 37 der Druckbereitstellungseinrichtung 5 angeschlossenen Systemdruckleitung 38 vorliegt. Die Bremsen 8, 9 sind dabei an einen ersten Bremskreis 27, die Bremsen 10, 11 an einen zweiten Bremskreis 33 hydraulisch angeschlossen.

Den Einlassventilen 6a-6d ist jeweils ein zu den Bremskreisversorgungsleitungen 13a, 13b hin öffnendes Rückschlagventil 50a-50d parallel geschaltet. In einer Rückfallbetriebsart werden die Bremskreisversorgungsleitungen 13a, 13b über hydraulische Leitungen 22a, 22b mit den Drücken der Druckräume 17, 18 des Hauptbremszylinders 2 beaufschlagt. Die Ausgangsanschlüsse der Auslassventile 7a-7d sind über eine Rücklaufleitung 14b mit dem Druckmittelvorratsbehälter 4 verbunden.

Der Hauptbremszylinder 2 weist in einem Gehäuse 21 zwei hintereinander angeordnete Kolben 15, 16 auf, die die hydraulischen Druckräume 17, 18 begrenzen. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei die Verbindungen durch eine Relativbewegung der Kolben 15, 16 im Gehäuse 21 absperrbar sind. Die Druckräume 17, 18 stehen andererseits mittels der hydraulischen Leitungen 22a, 22b mit den bereits genannten Bremskreisversorgungsleitungen 13a, 13b in Verbindung.

In der Druckausgleichsleitung 41a ist ein stromlos offenes Ventil 28 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1a infolge einer Pedalbetätigung mit der Translationsbewegung des ersten Hauptbremszylinderkolbens 15, dessen Betätigungsweg von einem, vorzugsweise redundant ausgeführten, Wegsensor 25 erfasst wird. Dadurch ist das entsprechende Kolbenwegsignal ein Maß für den Bremspedalbetätigungswinkel. Es repräsentiert einen Bremswunsch des Fahrzeugführers.

In den an die Druckräume 17, 18 angeschlossenen Leitungsabschnitten 22a, 22b ist je ein Trennventil 23a, 23b angeordnet, welches als ein elektrisch betätigbares, vorzugsweise stromlos offenes, 2/2-Wegeventil ausgebildet ist. Durch die Trennventile 23a, 23b kann die hydraulische Verbindung zwischen den Druckräumen 17, 18 des Hauptbremszylinders und den Bremskreisversorgungsleitungen 13a, 13b abgesperrt werden. Ein an den Leitungsabschnitt 22b angeschlossener Drucksensor 20 erfasst den im Druckraum 18 durch ein Verschieben des zweiten Kolbens 16 aufgebauten Druck.

Die Simulationseinrichtung 3 ist hydraulisch an den Hauptbremszylinder 2 ankoppelbar und besteht beispielsgemäß im Wesentlichen aus einer Simulatorkammer 29, einer Simulatorfederkammer 30 sowie einem die beiden Kammern 29, 30 voneinander trennenden Simulatorkolben 31. Der Simulatorkolben 31 stützt sich durch ein in der Simulatorfederkammer 30 angeordnetes elastisches Element (z. B. eine Feder), welches vorteilhafterweise vorgespannt ist, am Gehäuse 21 ab. Die Simulatorkammer 29 ist mittels eines elektrisch betätigbaren Simulatorventils 32 mit dem ersten Druckraum 17 des Hauptbremszylinders 2 verbindbar. Bei Vorgabe einer Pedalkraft und geöffnetem Simulatorventil 32 strömt Druckmittel vom Hauptbremszylinder-Druckraum 17 in die Simulatorkammer 29. Ein hydraulisch antiparallel zum Simulatorventil 32 angeordnetes Rückschlagventil 34 ermöglicht unabhängig vom Schaltzustand des Simulatorventils 32 ein weitgehend ungehindertes Zurückströmen des Druckmittels von der Simulatorkammer 29 zum Hauptbremszylinder-Druckraum 17. Andere Ausführungen und Anbindungen der Simulationseinrichtung an den Hauptbremszylinder 2 sind denkbar.

Die elektrisch steuerbare Druckbereitstellungseinrichtung 5 ist als eine hydraulische Zylinder-Kolben-Anordnung bzw. ein einkreisiger elektrohydraulischer Aktuator ausgebildet, deren/ dessen Druckkolben 36, welcher den Druckraum 37 begrenzt, von einem schematisch angedeuteten Elektromotor 35 unter Zwischenschaltung eines ebenfalls schematisch dargestellten Rotations-Translationsgetriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor zum Sensieren der Temperatur der Motorwicklung verwendet werden.

Der durch die Kraftwirkung des Kolbens 36 auf das in dem Druckraum 37 eingeschlossene Druckmittel erzeugte Aktuatordruck wird in die Systemdruckleitung 38 eingespeist und mit einem vorzugsweise redundant ausgeführten Drucksensor 19 erfasst. Bei geöffneten Zuschaltventilen 26a, 26b gelangt das Druckmittel in die Radbremsen 8, 9, 10, 11 zu deren Betätigung. Durch Vor- und Zurückschieben des Kolbens 36 erfolgt so bei geöffneten Zuschaltventilen 26a, 26b bei einer Normalbremsung in der "Brake-by-Wire"-Betriebsart ein Radbremsdruckaufbau und -abbau für alle Radbremsen 8, 9, 10, 11. Beim Druckabbau strömt dabei das vorher aus dem Druckraum 37 in die Radbremsen 8, 9, 10, 11 verschobene Druckmittel auf dem gleichen Wege wieder in den Druckraum 37 zurück. Dagegen strömt bei einer Bremsung mit radindividuell unterschiedlichen, mit Hilfe der Einlass- und Auslassventile 6a-6d, 7a-7d geregelten Radbremsdrücken (z. B. bei einer Antiblockierregelung (ABS-Regelung)) der über die Auslassventile 7a-7d abgelassene Druckmittelanteil in den Druckmittelvorratsbehälter 4 und steht somit zunächst der Druckbereitstellungseinrichtung 5 zur Betätigung der Radbremsen 8, 9, 10, 11 nicht mehr zur Verfügung. Ein Nachsaugen von Druckmittel in den Druckraum 37 ist durch ein Zurückfahren des Kolbens 36 bei geschlossenen Zuschaltventilen 26a, 26b durch eine Nachsaugleitung 58 möglich.

Die Bremsanlage 1 ist hydraulisch mit einem Zusatzmodul 70 verbunden, welches bei Ausfall der Druckaufbaumöglichkeit der Bremsanlage 1 Bremseingriffe durchführen kann. Auf diese Weise kann der Zeitraum überbrückt werden, bis der Fahrer das Abbremsen des Fahrzeuges übernehmen kann. Bremsanlage 1 und Zusatzmodul 70 bilden ein System bzw. Bremsanlagensystem 72.

Das Zusatzmodul 70 weist eine in einem Gehäuse bzw. Hydraulikgehäuse 76 angeordnete Hydraulikeinheit 80 auf. Eine Druckbereitstellungsvorrichtung 86 umfasst einen Elektromotor 92, durch den bedarfsweise zwei Pumpen 96, 98 betrieben werden. Die Pumpe 96 ist druckseitig über eine hydraulische Leitung bzw. Radbremszuleitung 102 mit der Radbremse 8 verbunden. Die Pumpe 98 ist druckseitig über eine Leitung bzw. Radbremszuleitung 108 mit der Radbremse 10 verbunden.

Das Zusatzmodul 70 ist dazu ausgelegt, im Bedarfsfall zuverlässig die Bremsfunktion übernehmen zu können. Dazu sind zwei Reservoire 120, 130 für Bremsflüssigkeit vorgesehen, die in der Hydraulikeinheit 80 integriert sind und im Hydraulikgehäuse 76 angeordnet sind. Das Bremsflüssigkeitsreservoir 120 ist mit der Saugseite der Pumpe 96 über eine hydraulische Leitung 136 hydraulisch verbunden, in die ein stromlos geschlossenes Reservoirventil 142 geschaltet ist. Das Reservoir 130 ist saugseitig über eine hydraulische Leitung 148, in die ein stromlos geschlossenes Reservoirventil 152 geschaltet ist, mit der Pumpe 98 hydraulisch verbunden. Ein bevorzugt redundant ausgebildeter Drucksensor 160 misst den Druck in der Leitung 102; ein bevorzugt redundant ausgebildeter Drucksensor 162 misst den Druck in der Leitung 108. Eine Steuer- und Regeleinheit 182 ist signaleingangsseitig mit den Drucksensoren 160, 162 verbunden.

Von der Leitung 102 zweigt eine hydraulische Rückführleitung 170 ab, die Leitung 102 mit dem Reservoir 120 hydraulisch verbindet, wobei in die Rückführleitung ein stromlos geschlossenes Rückführventil 176 geschaltet ist. Von der Leitung 108 verzweigt eine hydraulische Rückführleitung 180, in die ein stromlos geschlossenes Rückführventil 186 geschaltet ist.

Im Folgenden wird die hydraulische Verbindung des Zusatzmoduls 70 mit der Bremsanlage 1 beschrieben. Eine gemeinsame hydraulische Ausgleichsleitung 190, die in der FIG. 1 gestrichelt dargestellt ist und die teilweise durch das Gehäuse 21 der Bremsanlage 1 geführt ist, verbindet beide Reservoire 120, 130 mit dem Bremsmittelvorratsbehälter 4. In einer bevorzugten Variante ist eine Ausgleichsleitung 192, welche außerhalb des Gehäuses 21 geführt ist, mit dem Bremsmittelvorratsbehälter 4 an einem separaten, außerhalb des Gehäuses 21 liegenden, Bremsmittelbehälteranschluss 196 verbunden. Die Ausgleichsleitung 190, 192 ist bevorzugt zumindest teilweise als Stahlleitung ausgeführt.

Die Radbremse 9, die vorliegend der rechten Hinterradbremse entspricht, ist mit der Druckbereitstellungseinrichtung über eine Bremsleitung 202 verbunden. Die Radbremse 11, die der linken Hinterradbremse entspricht, ist über eine Bremsleitung 206 mit der Druckbereitstellungseinrichtung 5 verbunden. Die Radbremse 8, die der linken Vorderradbremse entspricht, ist durch eine Bremsleitung 200 mit der Druckbereitstellungseinrichtung 5 verbunden. Die Radbremse 10, die der rechten Vorderradbremse entspricht, ist über eine Bremsleitung 204 mit der Druckbereitstellungseinrichtung verbunden.

Das Zusatzmodul 70 ist hydraulisch in die Bremsleitungen 200, 204 derart geschaltet, dass ein Abschnitt dieser Bremsleitungen, der hier auch als Radbremszuleitung 102, 108 bezeichnet wird, im Zusatzmodel 70 verläuft. Auf diese Weise kann das Zusatzmodul in den Bremsen 8, 10 bedarfsweise Bremsdruck aufbauen. Die Bremsleitung 200 verläuft in einem Leitungsabschnitt 210 innerhalb des Zusatzmoduls 70. Der Leitungsabschnitt 210 verbindet dabei hydraulisch einen Abschnitt 216, der innerhalb der Bremsanlage 1 verläuft, mit der hydraulischen Leitung 102. In den Leitungsabschnitt 210 ist ein stromlos offenes Trennventil 220 geschaltet, zu dem ein Rückschlagventil 226 parallel geschaltet, welches bei gesperrtem Trennventil 220 den Rückfluss von Bremsflüssigkeit aus der Radbremse 8 verhindert. Ein Drucksensor 194 misst den Druck in der Bremsleitung 200. Das Signal des Drucksensors dient bevorzugt der Fahrerbremswunscherfassung in einer Rückfallebene, in der die Bremsdruckstellung von dem Zusatzmodul übernommen wird.

Die Bremsleitung 204 verläuft in einem Leitungsabschnitt 234 innerhalb des Zusatzmoduls 70. Der Leitungsabschnitt 234 verbindet dabei hydraulisch einen Abschnitt 238, der innerhalb der Bremsanlage 1 verläuft mit der hydraulischen Leitung 108. In den Leitungsabschnitt 234 ist ein stromlos offenes Trennventil 240 geschaltet, zu dem ein Rückschlagventil 246 parallel geschaltet, welches bei gesperrtem Trennventil 240 den Rückfluss von Bremsflüssigkeit aus der Radbremse 10 verhindert.

Wenn die Bremsanlage 1 eine Fehlfunktion aufweist oder komplett ausfällt, so dass sie nicht den geforderten Bremsdruck in den Radbremsen 8-11 einstellen kann, kann das Zusatzmodul 70 Druck in den beiden Vorderradbremsen 8, 10 aufbauen. Dazu werden die beiden Trennventile 220, 240 in ihre Trennstellung geschaltet, so dass die Radbremsen 8, 10 von der Druckbereitstellungseinrichtung 5 und dem Hauptbremszylinder 2 hydraulisch getrennt werden. Die Steuer- und Regeleinheit 182 steuert den Elektromotor 92 an, der die Pumpen 96, 98 ansteuert. Die jeweilige Pumpe 96, 98 saugt dann aus dem jeweiligen Reservoir 120, 130 Bremsflüssigkeit an und befördert diese durch die entsprechende Radbremszuleitung 102, 108 in die Radbremse 8, 10. Während des Druckaufbaus werden die Rückführventile 176, 186 in ihre Trennstellung geschaltet, solange in beiden Radbremsen 8, 10 der gleiche Bremsdruck aufgebaut werden soll. Für unterschiedlichen Druckaufbau wird eines oder werden beide Rückführventile 176, 186 bedarfsweise geöffnet und fungieren als Auslassventile, durch die Bremsflüssigkeit in das jeweilige Reservoir 120, 130 strömen kann.

Vorzugsweise bleibt das Zusatzmodul 70 aktiv, wenn der Fahrer in einer hydraulischen Rückfallebene Bremskraft durch Muskelkraft aufbaut, indem er der das Bremspedal 1a betätigt. und es kann somit noch eine Bremskraftverstärkungsfunktion bereitgestellt werden. Auch kann so (zumindest für die Vorderachse) eine ABS Funktion realisiert werden, durch gezielte Druckabsenkung auch eine EBD Funktion für die Hinterachse. In der Rückfallebene wird an der Hinterachse durch das Zusatzmodul 70 bevorzugt eine IPB (el. Parkbremse) aktiviert. Diese Aktivierung wird bei Einbremsen des Fahrer zurückgenommen um ein Überbremsen (Blockieren) der Hinterachse zu vermeiden.

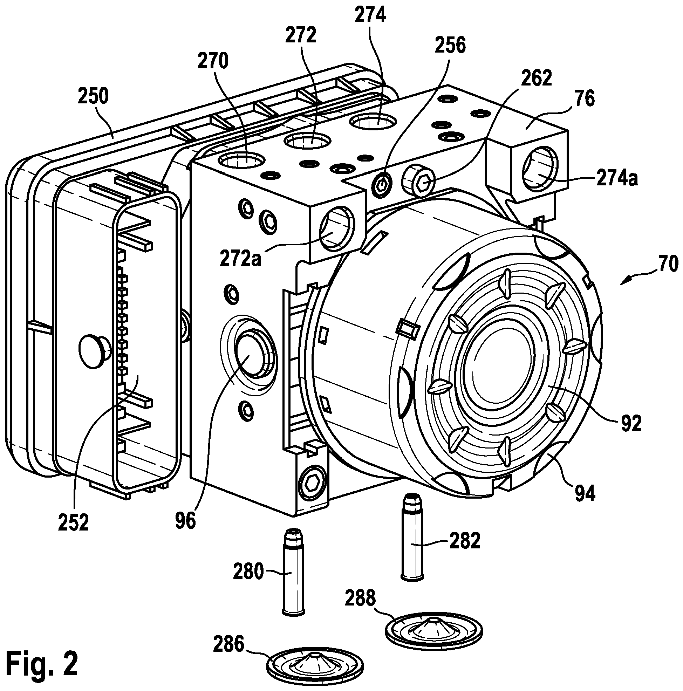

Eine perspektivische Darstellung des Zusatzmoduls 70 gemäß FIG. 1 ist in FIG. 2 dargestellt. Das Hydraulikgehäuse 76 der Hydraulikeinheit 80 ist gewissermaßen gesandwiched zwischen dem Motor 92, der in einem Motorgehäuse 94 angeordnet ist, und einem Elektronikgehäuse 250, in dem die Steuer- und Regeleinheit 182 angeordnet ist und das einen elektrischen Anschlussstecker 252 aufweist. Mit anderen Worten, der Motor 92 ist auf der entgegengesetzten Seite des Gehäuses 76 angeordnet als das Elektronikgehäuse 250. Eine der beiden Pumpen 96 ist auf der in der Abbildung linken Seite des Gehäuses 76 sichtbar, die andere Pumpe 98 ist auf der gegenüberliegenden Seite angeordnet. Weiterhin ist eine Ventilaufnahme 256 dargestellt. Ein Anschluss 270 dient zum Abschluss des Zusatzmoduls an einen Bremsmittelvorratsbehälter einer Bremsanlage, insbesondere den Bremsmittelvorratsbehälter 4 der Bremsanlage 1. Sichtbar sind weiterhin hydraulische Ausgänge 272, 274 zu Radbremsen (Radbremsen 8, 10 in FIG. 1) sowie eine Befestigungsschraube 262 für die ECU. Zur Verbindung mit der Bremsanlage 1 (z.B. mit den Abschnitten 216 und 238 in FIG. 1) sind hydraulische Eingänge 272a, 274a vorgesehen.

In der FIG. 2 sind weiterhin zwei Röhrchen 280, 282 und zwei Verschlussdeckel 286, 288 zu erkennen. Das Röhrchen 280 ist in dem Reservoir 120 angeordnet, welches von dem Verschlussdeckel 286 verschlossen wird. Das Röhrchen 282 ist in dem Reservoir 148 angeordnet, welches von dem Verschlussdeckel 288 verschlossen wird.

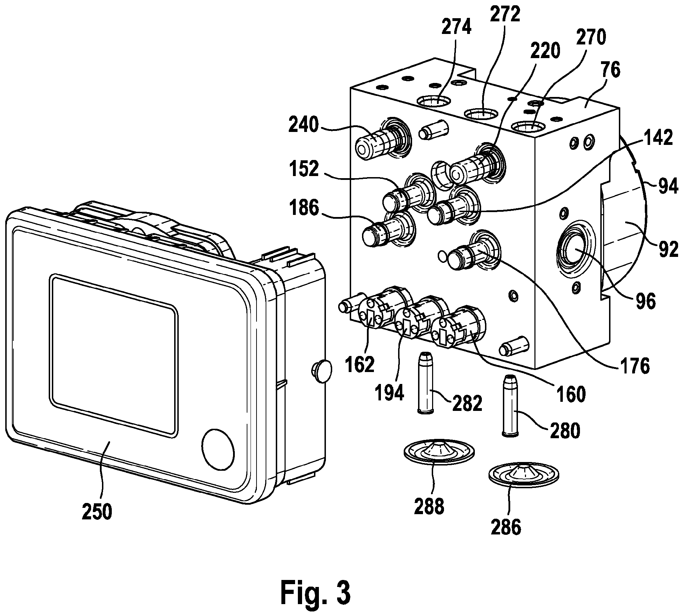

In FIG. 3 ist die dem Elektronikgehäuse 250 zugewandte Seite des Gehäuses 76 erkennbar. Die stromlos offenen Trennventile 220, 240 sind in einer ersten Reihe angeordnet. Darunter ist eine zweireihige Vierergruppe der stromlos geschlossenen Ventile 142, 152, 176, 186 angeordnet, wobei jeweils die beiden Reservoirventile 142, 152 in einer Reihe und die beiden Rückführventile 178, 186 in einer Zweierreihe angeordnet sind. Zudem sind die drei Drucksensoren 160, 162, 194, welche in einer Reihe angeordnet sind, erkennbar.

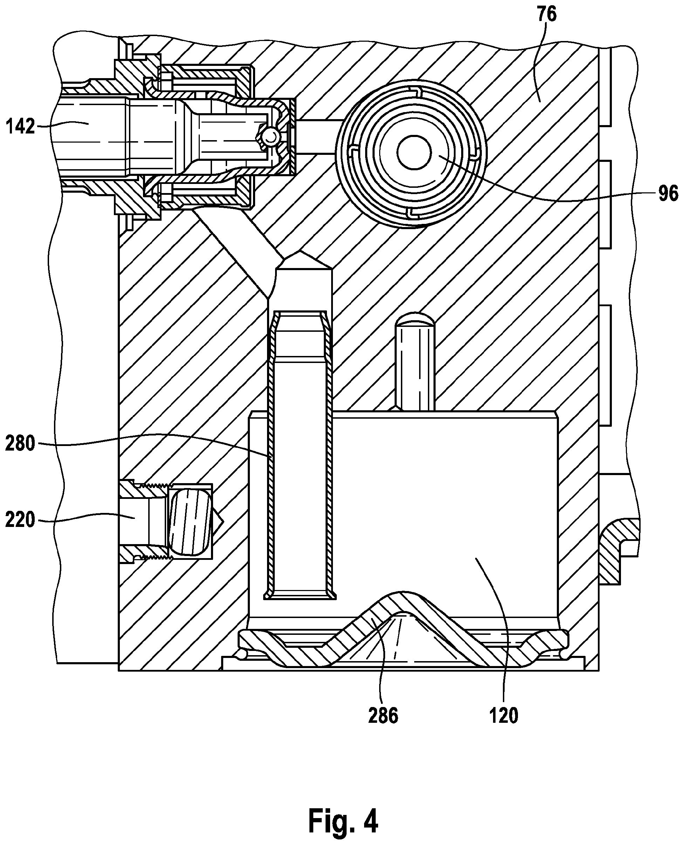

In FIG. 4 ist in einem seitlichen Schnitt das mit dem Verschlussdeckel 286 verschlossene Reservoir 120 erkennbar sowie das in dem Reservoir 120 angeordnete Röhrchen 280, welches verhindert, dass die Pumpe 96 Luft ansaugt.

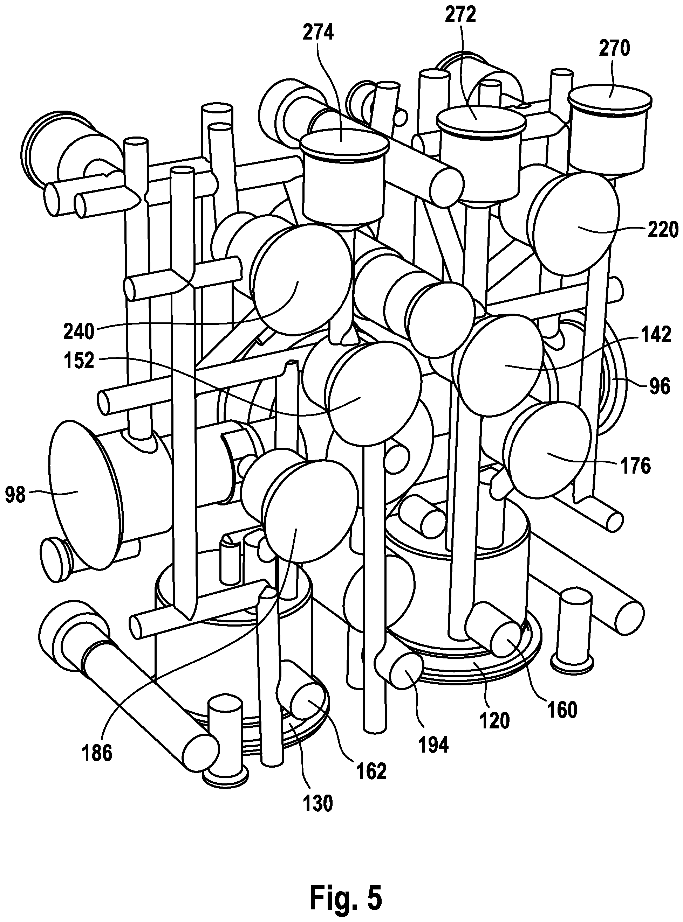

Die FIG. 5 zeigt eine Darstellung der in dem Gehäuse 76 angeordneten Komponenten, wobei das Gehäuse in dieser Darstellung nicht sichtbar ist. Dadurch sind die Ventil- und Sensorpositionen des Zusatzmoduls 70 gut erkennbar.

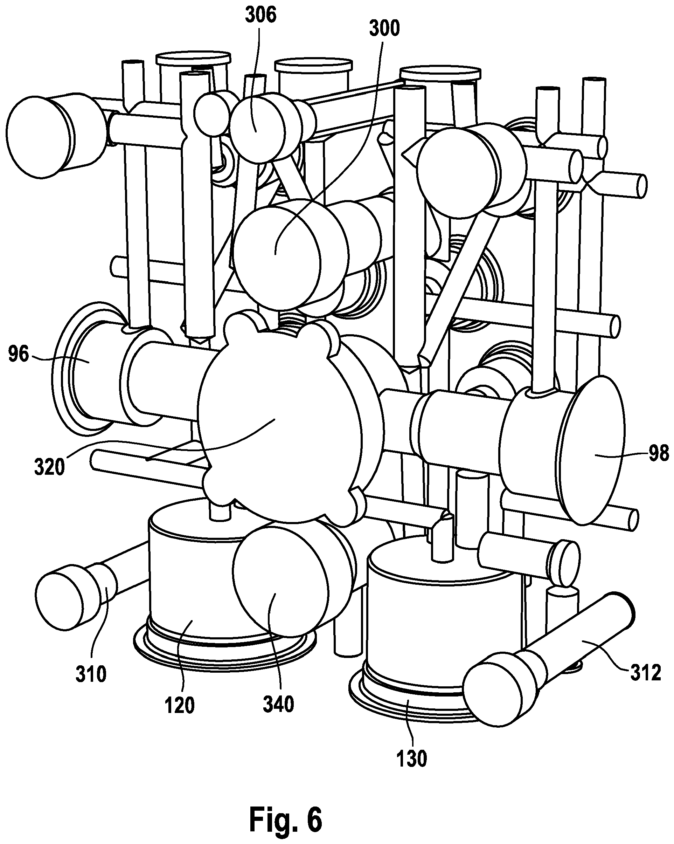

Die FIG. 6 zeigt eine motorseitige Ansicht des Zusatzmodells 70 mit nicht sichtbarem Gehäuse 76. Darin sind erkennbar eine Bohrung 300 für einen Motorstecker, der für die elektrische Verbindung des Motors 90 zur Steuer- und Regeleinheit 182 bzw. ECU dient. Bohrungen 306, 310, 312 nehmen Befestigungsschrauben für Befestigungsschrauben der ECU auf. Eine Motorbohrung 320 beinhaltet das A-Lager des Motors 90 bzw. das exzentrische Wellenende des Motors und bildet somit ein Exzenterlager. Sichtbar in der Figur ist weiterhin ein Reservoir 340 für Leckageflüssigkeit der Pumpen 96, 98.

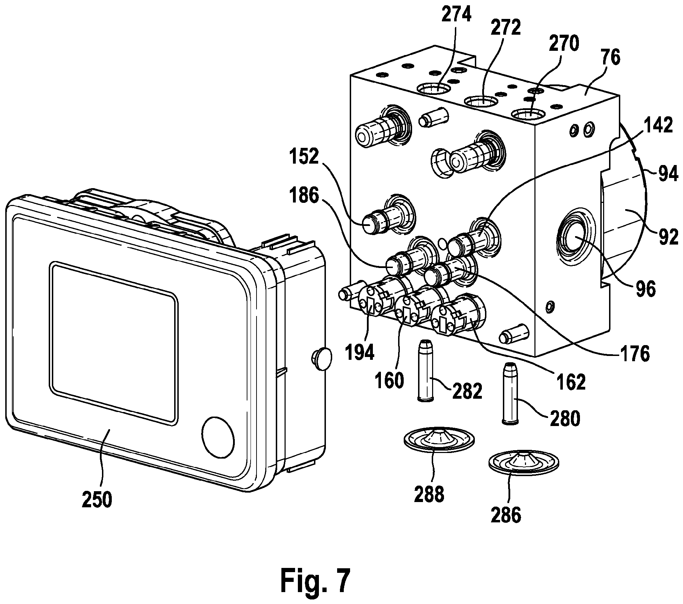

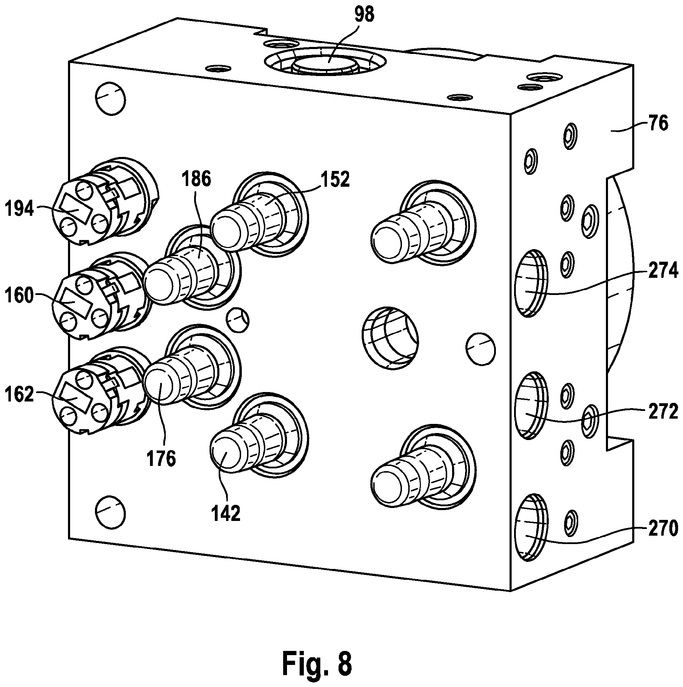

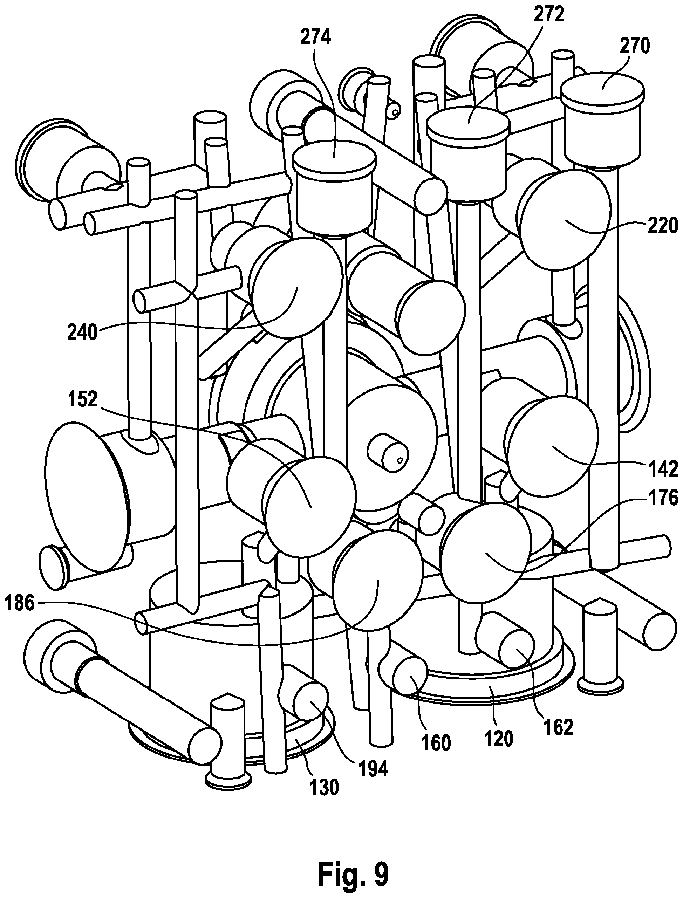

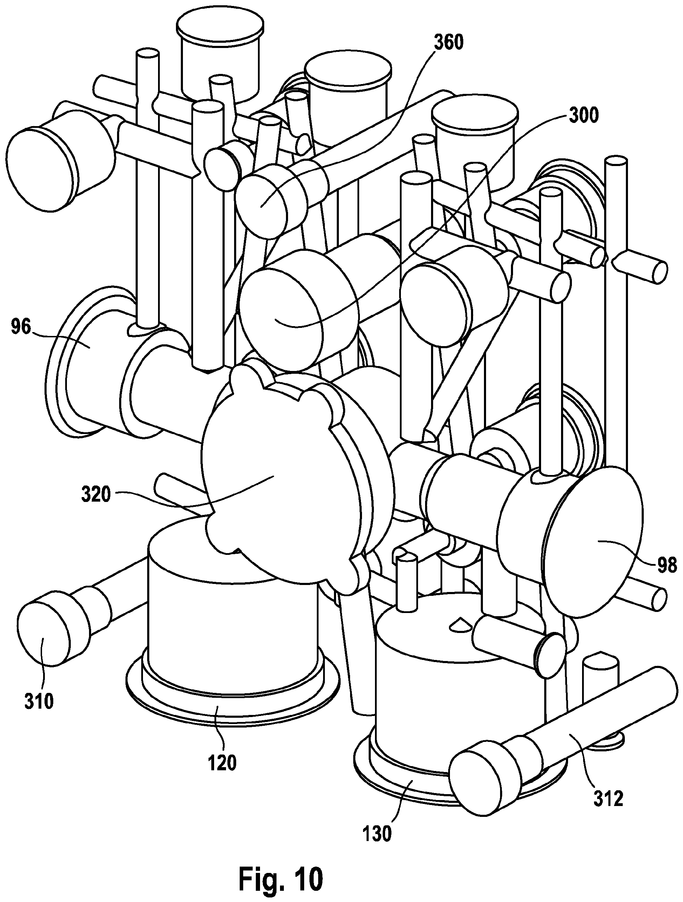

Ein Zusatzmodul 70 in einer weiteren bevorzugten Ausführungsform ist in FIG. 7 dargestellt. Es unterscheidet sich von der in FIG. 3 dargestellten Ausführungsform des Zusatzmoduls 70 durch die Anordnung der Ventile 152, 142, 186, 176, welche nun näher an die Drucksensoren 194, 160, 162 herangerückt sind. In den FIG. 8, 9, 10 ist diese Ausführungsform des Zusatzmoduls noch in weiteren perspektivischen Darstellungen zu sehen.

## Patentansprüche

1. Zusatzmodul (70) für eine elektrohydraulische Bremsanlage (1), insbesondere zur Verwendung bei hochautomatisiertem Fahren, umfassend eine Hydraulikeinheit (80) mit einer Druckbereitstellungsvorrichtung (86) zum Druckaufbau in wenigstens zwei Bremsen (8, 10), wobei wenigstens ein Reservoir (120, 130) für Bremsflüssigkeit in die Hydraulikeinheit (80) integriert ist,
**dadurch gekennzeichnet, dass**
das jeweilige Reservoir (120, 130) mit einer hydraulischen Ausgleichsleitung (190, 192) verbunden ist, die zur Bildung eines Atmosphärenanschlusses vorgesehen ist.

2. Zusatzmodul (70) nach Anspruch 1, wobei die Druckbereitstellungsvorrichtung (86) wenigstens eine Pumpe (96, 98) umfasst, die mit einem Elektromotor (92) angetrieben wird und deren Saugseite hydraulisch mit dem jeweiligen Reservoir (120, 130) verbunden ist.

3. Zusatzmodul (70) nach Anspruch 2, wobei genau zwei Reservoire (120, 130) für Bremsflüssigkeit und genau zwei Pumpen (96, 98) vorgesehen sind, und wobei jede der beiden Pumpen (96, 98) saugseitig mit einer Saugleitung (136, 148) mit genau einem Reservoir (120, 130) hydraulisch verbunden ist.

4. Zusatzmodul (70) nach Anspruch 3, wobei beide Pumpen (96, 98) von einem gemeinsamen Elektromotor (92) angetrieben werden.

5. Zusatzmodul (70) nach einem der Ansprüche 2 bis 4, wobei jede Pumpe (96, 98) druckseitig mit einer Radbremszuleitung (102, 108) verbunden ist, die zur Verbindung mit einer hydraulischen Radbremse (8, 10) ausgelegt ist.

6. Zusatzmodul (70) nach Anspruch 5, wobei die jeweilige Radbremszuleitung (102, 108) mit einem Drucksensor (160, 162) verbunden ist, der den Druck in der Radbremszuleitung (102, 108) misst.

7. Zusatzmodul (70) nach einem der Ansprüche 3 bis 6, wenn rückbezogen auf Anspruch 3, wobei in die jeweilige Saugleitung (136, 148) ein stromlos geschlossenes Ventil (142, 152) geschaltet ist.

8. Zusatzmodul (70) nach einem der Ansprüche 5 bis 7, wobei von der jeweiligen Radbremszuleitung (102, 108) eine hydraulische Rückführleitung (170, 180) abzweigt, die mit jeweils einem Reservoir (120, 130) hydraulisch verbunden ist.

9. Zusatzmodul (70) nach Anspruch 8, wobei in die jeweilige Rückführleitung (170, 180) ein stromlos geschlossenes Rückführventil (176, 186) geschaltet ist.

10. Zusatzmodul (70) nach einem der Ansprüche 2 bis 9, derart konfiguriert, dass die jeweilige Pumpe (96, 98) aus dem jeweiligen Reservoir (120, 130) von unten ansaugt.

11. Zusatzmodul (70) nach einem der Ansprüche 1 bis 10, umfassend ein Hydraulikgehäuse (76) für die Hydraulikeinheit (80), ein Motorgehäuse (94) und ein Elektronikgehäuse (250).

12. Zusatzmodul (70) nach Anspruch 11, wobei das Hydraulikgehäuse (76) zwischen Elektronikgehäuse (250) und Motorgehäuse (94) angeordnet ist.

13. Bremsanlagensystem (72), insbesondere für hochautomatisiertes Fahren, umfassend eine Bremsanlage (1), umfassend
• hydraulisch betätigbare Radbremsen (8, 9, 10, 11);
• zumindest ein elektrisch betätigbares Radventil (6a-6d, 7a-7d) je Radbremse zum Einstellen radindividueller Bremsdrücke;
• einen mit den Radbremsen (8, 9, 10, 11) verbundenen und/oder verbindbaren Hauptbremszylinder (2);
• einen unter Atmosphärendruck stehenden Druckmittelvorratsbehälter (4); und
• eine elektrisch steuerbare Druckbereitstellungseinrichtung (5) zur Betätigung der Radbremsen (8, 9, 10, 11) mit einem hydraulischen Druckraum (37), wobei die jeweilige Radbremse (8, 9, 10, 11) hydraulisch durch eine Radbremsleitung (200, 202, 204, 206) mit dem Druckraum (37) verbunden ist;
weiterhin umfassend ein Zusatzmodul (70) nach einem der Ansprüche 1 bis 12.

14. Bremsanlagensystem (72) nach Anspruch 13, wobei die Ausgleichsleitung (190) mit dem Druckmittelvorratsbehälter (4) der Bremsanlage (1) verbunden ist.

15. Bremsanlagensystem (72) nach Anspruch 14, wobei die Ausgleichsleitung (190) zumindest teilweise als Stahlleitung ausgebildet ist.

16. Bremsanlagensystem (72) nach Anspruch 14 oder 15, wobei eine erste Radbremsleitung (200) der Bremsanlage (1) in einer ersten Radbremszuleitung (102) des Zusatzmoduls (70) mündet, und wobei eine zweite Radbremsleitung (204) der Bremsanlage (1) in einer zweiten Radbremszufuhrleitung (108) des Zusatzmoduls (70) mündet, und wobei in die jeweilige Radbremszuleitung (102, 108) ein stromlos offenes Trennventil (220, 246) geschaltet ist.

17. Bremsanlagensystem (72) nach einem der Ansprüche 14 bis 16, wobei die beiden Radbremszuleitungen (102, 108) mit Vorderradbremsen (8, 10) verbunden sind.

## Claims

1. Auxiliary module (70) for an electrohydraulic brake assembly (1), in particular for use in highly automated driving, comprising a hydraulics unit (80) with a pressure provision device (86) for building up pressure in at least two brakes (8, 10), wherein at least one reservoir (120, 130) for brake fluid is integrated into the hydraulics unit (80),
**characterized in that**
the respective reservoir (120, 130) is connected to a hydraulic equalization line (190, 192) which is provided for forming a connection to the atmosphere.

2. Auxiliary module (70) according to Claim 1, wherein the pressure provision device (86) comprises at least one pump (96, 98) which is driven by means of an electric motor (92) and the suction side of which is hydraulically connected to the respective reservoir (120, 130).

3. Auxiliary module (70) according to Claim 2, wherein exactly two reservoirs (120, 130) for brake fluid and exactly two pumps (96, 98) are provided, and wherein each of the two pumps (96, 98) is, at the suction side, hydraulically connected via a suction line (136, 148) to exactly one reservoir (120, 130).

4. Auxiliary module (70) according to Claim 3, wherein the two pumps (96, 98) are driven by a common electric motor (92).

5. Auxiliary module (70) according to one of Claims 2 to 4, wherein each pump (96, 98) is, at the pressure side, connected to a wheel brake feed line (102, 108) which is designed for connection to a hydraulic wheel brake (8, 10).

6. Auxiliary module (70) according to Claim 5, wherein the respective wheel brake feed line (102, 108) is connected to a pressure sensor (160, 162) which measures the pressure in the wheel brake feed line (102, 108).

7. Auxiliary module (70) according to one of Claims 3 to 6, where referred back to Claim 3, wherein a valve (142, 152) which is closed when electrically deenergized is connected into the respective suction line (136, 148).

8. Auxiliary module (70) according to one of Claims 5 to 7, wherein, from the respective wheel brake feed line (102, 108), a hydraulic return line (170, 180) branches off which is hydraulically connected to in each case one reservoir (120, 130).

9. Auxiliary module (70) according to Claim 8, wherein a return valve (176, 186) which is closed when electrically deenergized is connected into the respective return line (170, 180).

10. Auxiliary module (70) according to one of Claims 2 to 9, configured such that the respective pump (96, 98) draws in from the respective reservoir (120, 130) from the bottom.

11. Auxiliary module (70) according to one of Claims 1 to 10, comprising a hydraulics housing (76) for the hydraulics unit (80), a motor housing (94), and an electronics housing (250).

12. Auxiliary module (70) according to Claim 11, wherein the hydraulics housing (76) is arranged between electronics housing (250) and motor housing (94).

13. Brake assembly system (72), in particular for highly automated driving, comprising a brake assembly (1), comprising
• hydraulically actuatable wheel brakes (8, 9, 10, 11) ;
• at least one electrically actuatable wheel valve (6a-6d, 7a-7d) for each wheel brake, for the purposes of setting wheel-specific brake pressures;
• a master brake cylinder (2) which is connected and/or connectable to the wheel brakes (8, 9, 10, 11);
• a pressure medium reservoir tank (4) which is at atmospheric pressure; and
• an electrically controllable pressure provision device (5) for the actuation of the wheel brakes (8, 9, 10, 11), having a hydraulic pressure space (37), wherein the respective wheel brake (8, 9, 10, 11) is hydraulically connected to the pressure space (37) by a wheel brake line (200, 202, 204, 206);
furthermore comprising an auxiliary module (70) according to one of Claims 1 to 12.

14. Brake assembly system (72) according to Claim 13, wherein the equalization line (190) is connected to the pressure medium reservoir tank (4) of the brake assembly (1).

15. Brake assembly system (72) according to Claim 14, wherein the equalization line (190) is formed at least partially as a steel line.

16. Brake assembly system (72) according to Claim 14 or 15, wherein a first wheel brake line (200) of the brake assembly (1) opens into a first wheel brake feed line (102) of the auxiliary module (70), and wherein a second wheel brake line (204) of the brake system (1) opens into a second wheel brake feed line (108) of the auxiliary module (70), and wherein an isolating valve (220, 246) which is open when electrically deenergized is connected into the respective wheel brake feed line (102, 108).

17. Brake assembly system (72) according to one of Claims 14 to 16, wherein the two wheel brake feed lines (102, 108) are connected to front-wheel brakes (8, 10).

## Revendications

1. Module supplémentaire (70) pour un équipement de freinage électro-hydraulique (1), notamment destiné à être utilisé lors d'une conduite fortement automatisée, comprenant une unité hydraulique (80) pourvue d'un arrangement de fourniture de pression (86) servant à la mise en pression dans au moins deux freins (8, 10), au moins un réservoir (120, 130) pour du liquide de frein étant intégré dans l'unité hydraulique (80),
**caractérisé en ce que**
le réservoir (120, 130) respectif est relié à une conduite d'équilibrage hydraulique (190, 192) qui est conçue pour former un raccord atmosphérique.

2. Module supplémentaire (70) selon la revendication 1, l'arrangement de fourniture de pression (86) comportant au moins une pompe (96, 98) qui est entraînée par un moteur électrique (92) et dont le côté aspiration est relié hydrauliquement au réservoir (120, 130) respectif.

3. Module supplémentaire (70) selon la revendication 2, exactement deux réservoirs (120, 130) pour du liquide de frein et exactement deux pompes (96, 98) étant présents, et chacune des deux pompes (96, 98) étant reliée hydrauliquement côté aspiration à exactement un réservoir (120, 130) par une conduite d'aspiration (136, 148).

4. Module supplémentaire (70) selon la revendication 3, les deux pompes (96, 98) étant entraînées par un moteur électrique (92) commun.

5. Module supplémentaire (70) selon l'une des revendications 2 à 4, chaque pompe (96, 98) étant reliée côté refoulement à une conduite d'arrivée de frein de roue (102, 108) qui est conçue pour être reliée à un frein de roue (8, 10) hydraulique.

6. Module supplémentaire (70) selon la revendication 5, la conduite d'arrivée de frein de roue (102, 108) respective étant reliée à un capteur de pression (160, 162) qui mesure la pression dans la conduite d'arrivée de frein de roue (102, 108).

7. Module supplémentaire (70) selon l'une des revendications 3 à 6, s'il est fait référence à la revendication 3, une vanne (142, 152) fermée au repos étant branchée dans la conduite d'aspiration (136, 148) respective.

8. Module supplémentaire (70) selon l'une des revendications 5 à 7, une conduite de retour (170, 180) hydraulique étant dérivée de la conduite d'arrivée de frein de roue (102, 108) respective, laquelle est reliée hydrauliquement respectivement à un réservoir (120, 130).

9. Module supplémentaire (70) selon la revendication 8, une vanne de retour (176, 186) fermée au repos étant branchée dans la conduite de retour (170, 180) respective.

10. Module supplémentaire (70) selon l'une des revendications 2 à 9, configuré de telle sorte que la pompe (96, 98) respective aspire par le bas depuis le réservoir (120, 130) respectif.

11. Module supplémentaire (70) selon l'une des revendications 1 à 10, comprenant un carter hydraulique (76) pour l'unité hydraulique (80), un carter de moteur (94) et un boîtier électronique (250).

12. Module supplémentaire (70) selon la revendication 11, le carter hydraulique (76) étant disposé entre le boîtier électronique (250) et le carter de moteur (94).

13. Système d'équipement de freinage (72), notamment destiné à être utilisé pour une conduite fortement automatisée, comprenant un équipement de freinage (1), comprenant
* des freins de roue (8, 9, 10, 11) pouvant être actionnés hydrauliquement ;
* au moins une vanne de roue (6a-6d, 7a-7d) pouvant être actionnée électriquement par frein de roue servant à régler des pressions de freinage individuelles de roue ;
* un maître-cylindre de frein (2) relié et/ou pouvant être relié aux freins de roue (8, 9, 10, 11) ;
* un réservoir à fluide de pression (4) qui se trouve sous pression atmosphérique ; et
* un dispositif de fourniture de pression (5) pouvant être commandé électriquement destiné à actionner les freins de roue (8, 9, 10, 11), comprenant un espace de pression hydraulique (37), le frein de roue (8, 9, 10, 11) respectif étant relié hydrauliquement à l'espace de pression (37) par une conduite de frein de roue (200, 202, 204, 206) ;
comprenant en outre un module supplémentaire (70) selon l'une des revendications 1 à 12.

14. Système d'équipement de freinage (72) selon la revendication 13, la conduite d'équilibrage (190) étant reliée au réservoir à fluide de pression (4) de l'équipement de freinage (1).

15. Système d'équipement de freinage (72) selon la revendication 14, la conduite d'équilibrage (190) étant au moins partiellement réalisée sous la forme d'une conduite en acier.

16. Système d'équipement de freinage (72) selon la revendication 14 ou 15, une première conduite de frein de roue (200) de l'équipement de freinage (1) débouchant dans une première conduite d'arrivée de frein de roue (102) du module supplémentaire (70), et une deuxième conduite de frein de roue (204) de l'équipement de freinage (1) débouchant dans une deuxième conduite d'arrivée de frein de roue (108) du module supplémentaire (70), et une vanne de sectionnement (220, 246) ouverte au repos étant branchée dans la conduite d'arrivée de frein de roue (102, 108) respective.

17. Système d'équipement de freinage (72) selon l'une des revendications 14 à 16, les deux conduites d'arrivée de frein de roue (102, 108) étant reliées aux freins de roue avant (8, 10).
